(19) Europäisches Patentamt
European Patent Office
Office européen des brevets

(11) **EP 3 019 887 B1**

(12) **EUROPÄISCHE PATENTSCHRIFT**

(45) Veröffentlichungstag und Bekanntmachung des Hinweises auf die Patenterteilung:
**20.11.2019 Patentblatt 2019/47**

(21) Anmeldenummer: **14732072.5**

(22) Anmeldetag: **30.04.2014**

(51) Int Cl.:
*G01S 5/02* (2010.01)   *H04W 64/00* (2009.01)

(86) Internationale Anmeldenummer:
**PCT/DE2014/100151**

(87) Internationale Veröffentlichungsnummer:
**WO 2015/003684 (15.01.2015 Gazette 2015/02)**

(54) **ERMITTLUNG EINER POSITION EINES MOBILEN EMPFÄNGERS**

DETERMINING A POSITION OF A MOBILE RECEIVER

DÉTERMINATION D'UNE POSITION D'UN RÉCEPTEUR MOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.07.2013 DE 102013107242**

(43) Veröffentlichungstag der Anmeldung:
**18.05.2016 Patentblatt 2016/20**

(73) Patentinhaber: **Deutsches Zentrum für Luft- und Raumfahrt e.V.**
**51147 Köln (DE)**

(72) Erfinder:
• **GENTNER, Christian**
**73433 Aalen (DE)**
• **JOST, Thomas**
**82205 Gilching (DE)**

(74) Vertreter: **Rösler, Frank**
**Rösler · Rasch · van der Heide & Partner**
**Patent- und Rechtsanwälte PartG mbB**
**Bodenseestraße 18**
**81241 München (DE)**

(56) Entgegenhaltungen:
**EP-A1- 2 570 772     US-A1- 2008 106 468**

• **GENTNER CHRISTIAN ET AL: "Indoor positioning using time difference of arrival between multipath components", INTERNATIONAL CONFERENCE ON INDOOR POSITIONING AND INDOOR NAVIGATION, IEEE, 28. Oktober 2013 (2013-10-28), Seiten 1-10, XP032595727, DOI: 10.1109/IPIN.2013.6817908 [gefunden am 2014-05-16]**

EP 3 019 887 B1

## Beschreibung

Die Erfindung betrifft ein Verfahren und eine Vorrichtung zur Ermittlung einer Position eines mobilen Empfängers RX, der sich in einer zumindest quasi-stationären Umgebung bewegt. Die Ermittlung der Position erfolgt dabei auf Basis von Signalen s(t), die von einem in der Umgebung ortsfest positionierten Sender TX zum Zeitpunkt t=kT mit Zeitschritten k und Zeitinkement T ausgesandt werden, wobei der Empfänger RX ein vom Sender TX ausgestrahltes Signal s(kT),

$$q(k,\tau) = \sum_{i=0}^{N(k)-1} s_i(\tau)$$

das über N(k) Übertragungswege als Signalkomponenten $s_i(\tau)$ übertragen wird, als Empfangssignal empfängt, mit k:= Zeitschritt, $\tau$:= Zeitverzögerung, und i = 0, ..., N(k)-1. Ein vom Sender TX ausgesandtes Signal s(kT), wird also mit anderen Worten über eine Mehrwegeausbreitung an den Empfänger RX übertragen. Bei der Mehrwegeübertragung werden vorliegend auf den verschiedenen Übertragungswegen als Interaktionen des Signals: Reflexionen der Signalkomponenten $s_i(\tau)$ an Reflektoren und/oder Streuungen der Signalkomponenten $s_i(\tau)$ an Streuern berücksich-tigt.

Die Positionsermittlung ist heute neben der Kommunikation einer der wichtigsten Bereiche bei denen eine Funkübertragung von Signalen genutzt wird. Die Positionsermittlung erfolgt dabei durch Ermittlung der Ausbreitungsdistanz eines von einem Sender TX mit bekannter Position ausgesandten Signals zu einem Empfänger RX. Unter direkten (quasioptischen) Ausbreitungsbedingungen (engl. "line of sight conditions") kann die zurückgelegte Distanz eines von einem Senders TX ausgesandten Signal aus der Amplitude und der Phase bzw. der Zeitverzögerung (engl. "delay") des vom Empfänger empfangenen Breitbandsignals ermittelt werden. Um eine dreidimensionale Position des Empfängers RX zu ermitteln, müssen die Entfernungen zu mindestens drei unterschiedlichen Sendern TX ermittelt werden, wobei unterstellt wird, dass die jeweiligen Positionen der Sender $TX_i$ bekannt sind, und die Sender $TX_i$ und der Empfänger RX zeitsynchronisiert sind. Solche Positionierungsverfahren werden beispielsweise von Basisstationen für mobile Kommunikation, von globalen Satelliten Navigationssystemen (GNSSs), speziellen Ultrabreitbandsendern oder WLAN-Basisstationen zur "Indoor"-Positionserkennung genutzt.

Bekannt ist weiterhin, dass bei einem Mehrwegempfang von Funksignalen (engl. "multipath reception") die Genauigkeit der Positionsermittlung verringert ist, sofern zur Positionsermittlung lediglich ein Standardverfahren zur Synchronisierung bspw. das sog. "delay locked loop"-Verfahren angewandt wird. Ansätze zur Verbesserung der Genauigkeit der Positionsermittlung bei einem Mehrwegempfang bzw. der Genauigkeit bei der Distanzermittlung zwischen Sender TX und Empfänger RX basieren im Allgemeinen auf einer Schätzung der Kanalimpulsantwort (eng. Channel impulse response"). Dabei wird für die zuerst eintreffende Signalkomponente $s_i(\tau)$ eine quasioptische, d.h. geradlinige Ausbreitung des Teilsignals vom Sender zum Empfänger unterstellt. Beispiele für diese Verfahren sind folgenden Veröffentlichungen zu entnehmen:

- F. Antreich, J, Nossek, und W. Utschick, "Maximim Likelihood Delay Estimation in a Navigation Receiver for Aeronautical Applications" Aerospace Science and Technology vol. 12, no. 3, Seiten 256-267, 2008;

- B. Krach, P Robertson, und R Weigel, "An Efficient Two-Fold Marginalized Bayesian Filter for Multipath Mitigation in GNSS Receivers", EURASIP J Adv. Sig. Proc., vol 2010, 2010;

- P. Closas, C. Fernàndez-Prades, und J.A. Fernàndez-Rubio, "A Bayesian Approach to Multipath Mitigation in GNSS Receivers", vol. 3, no. 4, Seiten 695-706, Aug. 2009.

Diese Verfahren bestimmen jeweils die jeweiligen Übertragungsdistanzen, der einzelnen Signalkomponenten $s_i(\tau)$, bzw. ermitteln die am Empfänger RX zuerst eintreffende Signalkomponente $s_i(\tau)$, um so den Einfluss der anderen Signalkomponenten $s_i(\tau)$, die später eintreffen, zu beseitigen. Zur Bestimmung einer dreidimensionalen Position eines Empfängers RX benötigen diese Verfahren zumindest drei unterschiedliche, und sofern der Empfänger RX mit den Sendern $TX_i$ nicht synchronisiert ist, vier unterschiedliche Sender $TX_i$, die jeweils Signale an den Empfänger RX senden.

Für Anwendungen zur Innenraum-Positionsermittlung (engl. "indoor-positioning") eines Empfängers RX ist aus der Veröffentlichung:

- P. Meissner und K. Witrisal, "Multipath-Assisted Single-Anchor Indoor Localization in an Office Environment", in IWSSIP, April 2012

ein Verfahren bekannt, das zur Positionsermittlung des Empfängers RX einen Sender mit einer bekannten Position und bekannte Umgebungsgeometrien (Raumlayout) voraussetzt. Dabei werden zur Positionsbestimmung des Empfängers RX reflektierte Ultrabreitbandsignale genutzt, wobei sowohl die Raumgeometrie, bspw. die Position und Ausrichtung der Wände und die Position des Senders TX bekannt sein müssen.

Aus der US 2008/106468 A1 ist ein Verfahren zur Positionsermittlung eines Objekts in einem Gang, insbesondere einem Gang in einem Lagerhaus, bekannt wobei der Gang von einer Vielzahl von Oberflächen definiert/begrenzt wird.

Weiterhin ist aus der EP 2 570 772 A1 ist ein Verfahren zur Positionsbestimmung von Fußgängern oder Robotern basierend auf der Nutzung von Funksendern bekannt.

Die Aufgabe der Erfindung ist es, eine verbesserte und einfachere Positionsermittlung eines Empfängers RX zu ermöglichen.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein verfahrensgemäßer Aspekt der Aufgabe ist mit einem Verfahren zur Ermittlung einer Position eines mobilen Empfängers RX, der sich in einer unbekannten aber zumindest quasi-stationären Umgebung bewegt, auf Basis von Signalen s(kT), die von einem in der Umgebung ortsfest positionierten Sender TX ausgesandt werden, gelöst, wobei der Empfänger RX ein vom Sender TX ausgestrahltes Signal s(kT), das über $N(k)$ Übertragungswege als Signalkom-

$$q(k,\tau) = \sum_{i=0}^{N(k)-1} s_i(\tau)$$

ponenten $s_i(\tau)$ übertragen wird, als Empfangssignal $N(k)$-1 empfangen wird, mit k:= Zeitschritt, k = 0, 1, 2, ..., $\tau$:= Zeitverzögerung, $i=0$ und i = 0, ..., $N(k)$-1. Das Verfahren berücksichtigt auf den Übertragungswegen als Interaktionen: Reflexionen der Signalkomponenten $s_i(\tau)$ an Reflektoren und Streuungen der Signalkomponenten $s_i(\tau)$ an Streuern.

Das vorgeschlagene Verfahren zeichnet sich dadurch aus, dass auf Basis der Empfangssignale $q(k,\tau)$ eine Position $r_u(k)$ und eine Geschwindigkeit $v_u(k)$ des Empfängers RX, sowie für jeden der $N(k)$ Übertragungswege jeweils eine Position $r_{v,i}(k)$ eines virtuellen Senders $vTX_i$, und eine Übertragungswegdistanz $d_{v,i}$ zwischen dem Sender TX und einem auf dem i-ten Übertragungsweg liegenden letzten Streuer $STREU_i$, sofern ein solcher Streuer $STREU_i$ vorhanden ist, ermittelt werden. Dabei wird unterstellt, dass eine auf dem i-ten Übertragungsweg übertragene Signalkomponente $s_i(\tau)$ des Signals s(kT) zwischen dem letzten Streuer $STREU_i$ und dem Empfänger RX keine weitere Streuung mehr erfährt. Weiterhin wird unterstellt, dass jede vom Empfänger RX empfangenen Signalkomponente $s_i(\tau)$ von einem zugeordneten virtuellen Sender $vTX_i$ ausgesandt sei und ohne Interaktion direkt den Empfänger RX erreicht habe. Schließlich werden zumindest die ermittelte Position $r_u(k)$ des Empfängers RX und/oder die Geschwindigkeit $v_u(k)$ des Empfängers RX für weitere Auswertungen bereitgestellt und/oder ausgegeben.

Die Besonderheit des Verfahrens ist, dass eine Ermittlung der (relativen) Position des Empfängers RX ohne Kenntnis der Position des Senders TX und ohne Kenntnis einer Umgebungsgeometrie allein auf Basis der vom Empfänger RX empfangenen Signalkomponenten $s_i(\tau)$ erfolgt. Damit ist das Verfahren weitestgehend von weiteren Informationen, wie sie im Stand der Technik zu Positionsermittlung erforderlich sind, unabhängig. Eine weitere Besonderheit des Verfahrens ist, dass für jede vom Empfänger RX empfangene Signalkomponente $s_i(\tau)$ angenommen wird, dass diese von einem zugeordneten virtuellen Sender $vTX_i$ ausgesandt ist, und jede Signalkomponente $s_i(\tau)$ von zugeordneten virtuellen Sender $vTX_i$ direkt, d.h. unter "line-of-sight conditions" zum Empfänger RX übertragen wird. Die ermittelten Positionen sind zunächst relative Positionen.

Eine Weiterbildung des Verfahrens zeichnet sich dadurch aus, dass zu Beginn des Verfahrens für die Position $r_u(k)$ und/oder die Geschwindigkeit $v_u(k)$ des Empfängers RX eine Startposition $r_u(k=0)$ bzw. eine Startgeschwindigkeit $v_u(k=0)$ oder eine Wahrscheinlichkeitsverteilung für eine Startposition $r_u(k=0)$ bzw. eine Startgeschwindigkeit $v_u(k=0)$ vorgegeben wird. Dies ermöglicht die Ermittlung absoluter Positionen in einem gegebenen Koordinatensystem.

Eine besonders bevorzugte Weiterbildung des Verfahrens zeichnet sich dadurch aus, dass zum Ermitteln der Position $r_u(k)$ und der Geschwindigkeit $v_u(k)$ des Empfängers RX, sowie der Positionen $r_{v,i}(k)$ der virtuellen Sender $vTX_i$ und der Übertragungswegdistanzen $d_{v,i}$ ein SLAM-Algorithmus (engl. für "Simultaneous Localization and Mapping") angewendet wird. SLAM-Algorithmen sind dem Fachmann bekannt, so dass hierzu auf den Stand der Technik verwiesen wird.

Eine Weiterbildung des Verfahrens zeichnet sich dadurch aus, dass ein Zustandsvektor X(k) definiert ist, mit:

$$(1) \qquad X(k) = [r_u(k)^T, v_u(k)^T, x_{v,0}(k)^T, ..., x_{v,N(k)-1}(k)^T]^T$$

mit:

$r_u(k)$:          Position des Empfängers RX zum Zeitschritt k

$v_u(k)$: Geschwindigkeitsvektor des Empfängers RX zum Zeitschritt k, und

$x_{v,i}(k) = [r_{v,i}(k)^T, d_{v,i}]^T$: Zustandsvektor des virtuellen Sender $vTX_i$ zum Zeitschritt k, wobei $r_{v,i}(k)^T$ die Position des Senders $vTX_i$ und $d_{v,i}$ eine Übertragungswegdistanz ist,

und eine zeitliche Änderung des Zustandsvektors X(k) im Verfahren gemäß:

$$(2) \qquad X(k) = f_k(X(k-1), w(k-1))$$

abgebildet ist, mit:

$f_k(.\,,.)$: lineare oder nichtlineare Funktion von X(k-1), und

$w(k-1)$: Rauschterm.

Eine Weiterbildung des Verfahrens zeichnet sich dadurch aus, dass der Zustandsvektor X(k) wie vorstehend definiert ist, und eine zeitliche Änderung des Zustandsvektors $x_{v,i}(k)$ gemäß:

$$(3) \qquad x_{v,i}(k) = x_{v,i}(k-1) + w_i(k-1)$$

abgebildet ist, mit $w_i(k-1)$:= Rauschterm, und daher die Position des jeweiligen virtuellen Senders $vTX_i$ annähernd gleich bleibt. Der Rauschterm $w_i(k-1)$ weist typischerweise nur sehr kleine Werte auf.

Eine Weiterbildung des Verfahrens zeichnet sich dadurch aus, dass der Zustandsvektor X(k) mittels eines rekursiv definierten sequentiellen Bayes-Filters ermittelt wird. Die Anwendung des rekursiv definierten sequentiellen Bayes-Filters ist dem Fachmann ebenfalls aus dem Stand der Technik bekannt. Eine solche Anwendung wird zudem im Verlauf der nachfolgenden Ausführungen beschrieben.

Eine Weiterbildung des Verfahrens zeichnet sich dadurch aus, dass für die Empfangssignale $q(k,\tau)$ gilt:

$$(4) \qquad q(k,\tau) = \sum_{i=0}^{N(k)-1} \alpha_i(k) \cdot s(kT - (\lVert r_u(k) - r_{v,i}(k) \rVert + d_{v,i})/c) + n_q(k)$$

mit:

$s(kT)$: vom Sender TX zum Zeitpunkt kT übertragenes Signal

$q(k,\tau)$: vom Empfänger RX empfangenes Signal

$\alpha_i(k)$: Amplitude

$n_q(k)$: Rauschterm zum Zeitschritt k.

Eine Weiterbildung des Verfahrens zeichnet sich dadurch aus, dass ein Super Resolution-Algorithmus bspw. ein SAGE-Algorithmus Algorithmus (engl. für "Space-Altering Generalized Expectation-Maximation-Algorithm") genutzt wird, um eine Zeitverzögerung $\tau_i(k)$ der i-ten Signalkomponente $s_i(\tau)$ beim Empfänger RX zu schätzen. Hierzu wird bspw. auf den Artikel von Thomas Jost et al., "Detection and tracking of mobile propagation channel paths," Antennas and Propagation, IEEE Transactions on, vol. 60, no. 10, Seiten 4875 -4883, Oktober 2012, verwiesen.

Eine Weiterbildung des Verfahrens zeichnet sich dadurch aus, dass für die i-te Signalkomponente $s_i(\tau)$ folgendes Distanzmodell verwendet wird:

$$(5) \qquad d_i(k) = \lVert r_u(k) - r_{v,i}(k) \rVert + d_{v,i} + n_d(k) = c\tau_i(k)$$

mit:

$d_i(k)$: geschätzte Ausbreitungsdistanz der Signalkomponente $s_i(\tau)$,

c: Lichtgeschwindigkeit, und

$n_d(k)$: Rauschterm.

Die Aufgabe ist weiterhin gelöst durch ein Computersystem, mit einer Datenverarbeitungsvorrichtung, wobei die Datenverarbeitungsvorrichtung derart ausgestaltet ist, dass ein Verfahren, wie vorliegend beschrieben, auf der Datenverarbeitungsvorrichtung ausgeführt wird.

Zudem wird die Aufgabe gelöst durch ein digitales Speichermedium mit elektronisch aus lesbaren Steuersignalen, wobei die Steuersignale so mit einem programmierbaren Computersystem zusammenwirken können, dass ein Verfahren, wie vorliegend beschrieben, ausgeführt wird.

Ferner wird die Aufgabe gelöst durch ein Computer-Programm-Produkt mit auf einem maschinenlesbaren Träger gespeicherten Programmcode zur Durchführung des Verfahrens, wie vorliegend beschrieben, wenn der Programmcode auf einer Datenverarbeitungsvorrichtung ausgeführt wird.

Schließlich betrifft die Erfindung ein Computer-Programm mit Programmcodes zur Durchführung des Verfahrens, wie vorliegend beschrieben, wenn das Programm auf einer Datenverarbeitungsvorrichtung abläuft. Dazu kann die Datenverarbeitungsvorrichtung als ein beliebiges aus dem Stand der Technik bekanntes Computersystem ausgestaltet sein.

Ein vorrichtungsgemäßer Aspekt der Aufgabe wird gelöst durch einen mobilen Empfänger RX, der in einer unbekannten aber zumindest quasi-stationären Umgebung bewegbar und dazu eingerichtet und ausgeführt ist, eine Position des Empfängers RX auf Basis von Signalen $s(kT)$ zu ermitteln, die von einem in der Umgebung ortsfest positionierten Sender TX ausgesandt werden, wobei der Empfänger RX ein vom Sender TX ausgestrahltes Signal $s(kT)$, das über $N(k)$ Übertragungswege als Signalkomponenten $s_i(\tau)$ übertragen wird, als Empfangssignal

$$q(\mathrm{k},\tau) = \sum_{i=0}^{N(k)-1} s_i(\tau)$$

empfängt, mit $k$:= Zeitschritt, $k = 0, 1, 2 ...$, $\tau$:= Zeitverzögerung, und $i = 0, ..., N(k)-1$, wobei auf den Übertragungswegen als Interaktionen Reflexionen der Signalkomponenten $s_i(\tau)$ an Reflektoren und Streuungen der Signalkomponenten $s_i(\tau)$ an Streuern berücksichtigt werden.

Der vorgeschlagene Empfänger RX umfasst ein Auswertemittel, das derart ausgeführt und eingerichtet ist, dass auf Basis der Empfangssignale $q(k,\tau)$ eine Position $r_u(k)$ und eine Geschwindigkeit $v_u(k)$ des Empfängers RX, sowie für jeden der $N(k)$ Übertragungswege jeweils eine Position $r_{v,i}(k)$ eines virtuellen Senders $vTX_i$, und eine Übertragungswegdistanz $d_{v,i}$ zwischen dem Sender TX und einem auf dem i-ten Übertragungsweg liegenden letzten Streuer $STREU_i$, sofern ein solcher Streuer $STREU_i$ vorhanden ist, ermittelt werden, wobei: eine auf dem i-ten Übertragungsweg übertragene Signalkomponente $s_i(\tau)$ des Signals $s(kT)$ zwischen dem letzten Streuer $STREU_i$ und dem Empfänger RX keine weitere Streuung mehr erfährt, und für die virtuellen Sender $vTX_i$ unterstellt wird, dass jede vom Empfänger RX empfangenen Signalkomponente $s_i(\tau)$ vom einem zugeordneten virtuellen Sender $vTX_i$ ausgesandt sei und ohne Interaktion (Reflexion und/oder Streuung) direkt den Empfänger RX erreicht habe. Der Empfänger umfasst weiterhin ein Ausgabemittel, mit dem zumindest die ermittelte Position $r_u(k)$ des Empfängers und/oder die Geschwindigkeit $v_u(k)$ des Empfängers RX für weitere Auswertungen bereitstellbar und/oder ausgegebbar sind.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:

Fig. 1a    ein Beispiel einer Signalübertragung zwischen Sender TX und Empfänger RX mit Signalreflexion,

Fig. 1b    ein Beispiel einer Signalübertragung zwischen Sender TX und Empfänger RX mit Signalsteuung,

Fig. 2    ein Beispiel einer Signalübertragung zwischen Sender TX und Empfänger RX mit einfacher Signalreflexion zur Erläuterung des Verfahrens,

Fig. 3    ein Beispiel einer Signalübertragung zwischen Sender TX und Empfänger RX mit mehrfacher Signalreflexion zur Erläuterung des Verfahrens,

Fig. 4    ein Beispiel einer Signalübertragung zwischen Sender TX und Empfänger RX mit Streuung zur Erläuterung des Verfahrens, und

Fig. 5    ein Beispiel einer Signalübertragung zwischen Sender TX und Empfänger RX mit Streuung und Reflexion zur Erläuterung des Verfahrens.

Bei der Funkübertragung eines Signals $s(kT)$ von einem Sender TX zu einem Empfänger RX wird das Signal $s(kT)$ in einer strukturierten Umgebung, bspw. in einer Großstadt mit Gebäuden und anderen Objekten, als eine Vielzahl von Signalkomponenten $s_i(\tau)$, an den Empfänger RX übertragen. Die unterschiedlichen Signalkomponenten $s_i(\tau)$ sind unterschiedlichen Übertragungswegen zugeordnet. Die Signalkomponenten $s_i(\tau)$ werden dabei an verschiedenen Objekten (bspw. Wänden, Masten, etc.) der Umgebung reflektiert bzw. gestreut. Diese Mehrwegeausbreitung des Signals $s(kT)$ vom Sender TX zum Empfänger RX bewirkt konstruktive bzw. destruktive Interferenzen und Phasenverschiebungen der beim Empfänger RX empfangenen Signalkomponenten $s_i(\tau)$. Im Allgemeinen ist die vom Empfänger RX erfasste Kanalantwort CIR (engl. für "Channel Impulse Response"): $h(k,\tau)$ die Summe von einer unendlichen Anzahl von einzelnen Signalkomponenten $s_i(\tau)$, die über eine unendliche Anzahl verschiedener Signalwege vom Sender TX zum Empfänger RX gelangen. Der Empfänger RX ist jedoch nur in der Lage Signalkomponenten si(τ) zur erfassen, deren Signalleistung größer als ein Empfindlichkeitsgrenzwert des Empfängers RX ist.

Die zeitabhängige Kanalimpulsantwort CIR h(k,τ) kann wie folgt definiert werden:

$$(6) \qquad h(k,\tau) = \sum_{i=0}^{N(k)-1} \alpha_i(k) \cdot \delta(\tau - \tau_i(k))$$

mit:

k: diskrete Zeitschritt
τ: Zeitverzögerung
N(k): Anzahl der Multipfadkomponenten, bzw. Anzahl der Multipfade
$\alpha_i(k)$: komplexe Amplitude der i-ten Signalkomponente $s_i$
$\tau_i(k)$: Zeitverzögerung der i-ten Signalkomponente $s_i$
δ(k): Dirac Verteilung

Die vom Empfänger RX empfangenen Signale $s_i(\tau)$ sind in der Bandbreite begrenzt, und werden daher mit einer Auflösung von 1/B gesampelt, wobei B die Bandbreite ist. Die Signalamplitude eines Samples ist daher die Summe der einzelnen empfangenen Signalkomponenten $s_i(\tau)$. Zusätzlich werden die empfangenen Signale $s_i(\tau)$ von einem Empfängerrauschen beeinflusst.

Bekannt sind sogenannte "Super Resolution"-Algorithmen, wie bspw. der "Space-Alternating Generalized Expectation-Maximation(SAGE)" Algorithmus, der die Schätzung von Parametern der Kanalimpulsantwort CIR $h(k_0, \tau)$ zur vorgegebenen Zeit $k_0$ ermöglicht.

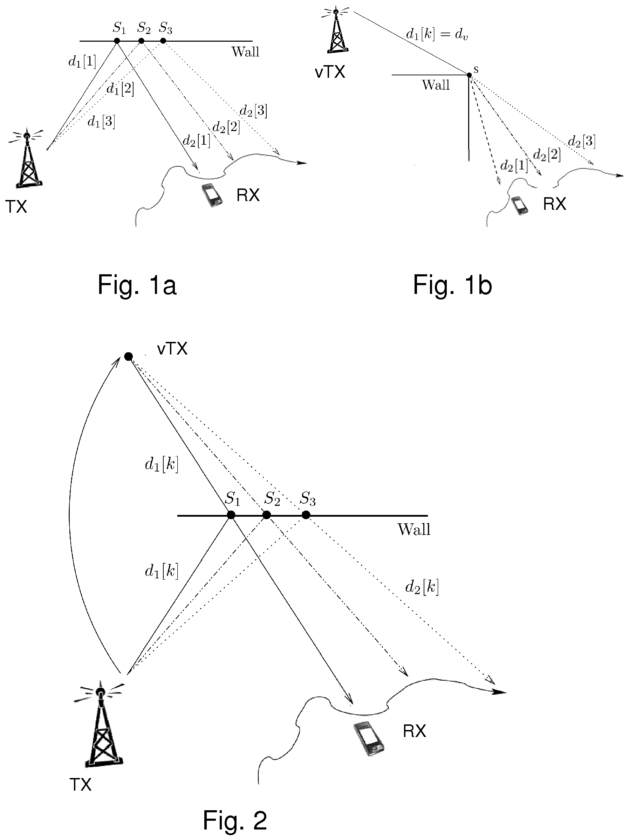

Das vorliegende Verfahren berücksichtigt als Signalinteraktionen auf den Übertragungswegen Reflexionen an Reflexionsobjekten und die Streuung an Streuobjekten. Hierzu zeigen **Fig. 1a-b** Szenarien für eine Signalübertragung von einem ortsfesten Sender TX zu einem sich bewegenden Empfänger RX. **Fig. 1a** zeigt ein Szenario, bei dem ein von dem Sender TX ausgesandtes Signal an einer Wand Wall reflektiert wird. **Fig. 1b** zeigt ein Szenario, bei dem ein von dem Sender TX ausgesandtes Signal an einem Streuer bspw. einer Wandkante gestreut wird. Wenn sich der Empfänger RX bewegt, dann wandert in **Fig. 1**a der Reflexionspunkt $S_k$ k = 1, ...; 3 an der Wand ebenfalls. Die von dem Signal s(kT) zurückgelegte Gesamtdistanz von dem Sender TX zum Empfänger RX ergibt sich dabei als Summe einer ersten Komponente $d_1(k)$, die die Distanz zwischen dem Sender TX und dem Reflexionspunkt $S_k$ angibt, und einer zweiten Komponente $d_2(k)$, die die Distanz vom jeweiligen Reflexionspunkt $S_k$ zum Empfänger RX angibt. An jedem Reflexionspunkt $S_k$ ist der Winkel zwischen der Wand Wall und der ersten Komponente $d_1(k)$ und der zweiten Komponente $d_2(k)$ gleich, was eine entsprechende Bewegung der Reflexionspunkte $S_k$ bedingt.

**Fig. 1b** zeigt das Szenario in dem das vom Sender TX ausgesandte Signal s(kT) an einem Streuer STREU gestreut wird. Die Gesamtdistanz d(k) des Übertragungsweges setzt sich auch hier aus einer ersten und einer zweiten Komponente $d(k) = d_1(k) + d_2(k)$ zusammen, wobei k das Zeitsample k= 1, 2, 3 angibt. Bei einer Bewegung des Empfängers RX ändert sich in diesem Fall die Gesamtdistanz d(k) des Übertragungsweges des Signals s. Gleichwohl bleibt im Falle der Streuung die (Signal-)Distanz zwischen Sender TX und Streuer STREU konstant, d.h. $d_1(k) = d_v$.

Vorstehend wurden zwei Interaktionen eines übertragenen Signals s(kT) bei einer Mehrwegeübertragung erläutert: die Reflexion und die Streuung. Nun wird erläutert, wie die auf verschiedenen Übertragungswegen übertragenen Signalkomponenten $s_i(\tau)$ zur Ermittlung der Position des Empfängers RX genutzt werden können. Dabei wird vorliegend vorgeschlagen, jede Signalkomponente $s_i(\tau)$ die von dem Empfänger RX erfasst wird, als ein von einem virtuellen Sender $vTX_i$ ausgesandtes und zum Empfänger RX quasioptisch (also ohne eine Interaktion mit der Umgebung unter line-of-sight conditions) übertragenes Signal $s_i(\tau)$ aufzufassen. Analog zu dem realen Sender TX, bei dem ein Signal im Fall einer quasioptischen Ausbreitung (line-of-sight) die Distanz zum Empfänger RX in der Zeit $\tau_0(k)$ zurücklegt, legt die Signalkomponente $s_i(\tau)$ die Zeit vom virtuellen Sender $vTX_i$ in der Zeit $\tau_i(k)$ zurück, wie in Gleichung (6) angegeben. Es wird daher vorliegend davon ausgegangen, dass der virtuelle Sender $vTX_i$ ortsfest angeordnet und mit dem realen Sender TX zeitsynchronisiert ist, d.h. ein Signal si(τ) wird in dem zugrundeliegenden Modell zeitgleich am realen Sender TX und am virtuellen Sender $vTX_i$ ausgesandt.

Hierzu zeigt **Fig. 2** das gleiche Szenario wie **Fig. 1a** bei dem das vom realen Sender TX ausgesandte Signal s(kT) an einer Wand Wall reflektiert wird. Um die Position des virtuellen Senders vTX zu bestimmen, wird die Position des realen Senders TX an der Wand Wall gespiegelt. Wenn sich der Empfänger RX bewegt, bewegt sich gleichermaßen der Reflexionspunkt ($S_1$, $S_2$, $S_3$), wobei die Position des virtuellen Senders vTX gleich bleibt. Die Distanz d(k) zwischen dem virtuellen Sender vTX und dem Empfänger RX ist für jeden Zeitschritt k jeweils identisch mit der Distanz zwischen dem realen Sender TX und dem Empfänger RX: $d(k) = d_1(k) + d_2(k)$.

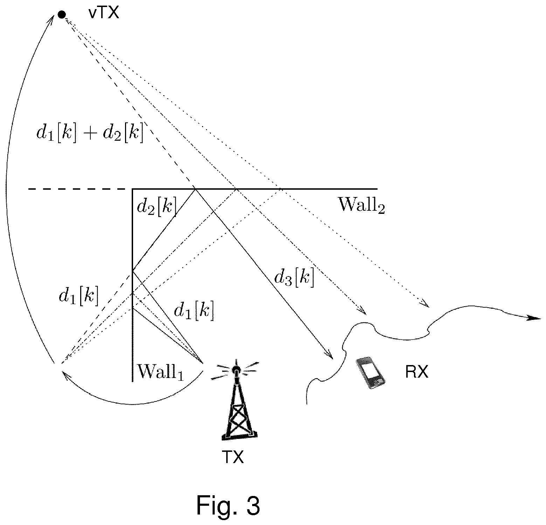

In einem Szenario, bei dem ein von dem Sender TX ausgesandtes Signal s(kT) mehrfach reflektiert wird in **Fig. 3** gezeigt. Das vom Sender TX ausgesandte Signal s(kT) wird dabei zweimal reflektiert, einmal an einer ersten Wand Wall$_1$ und einmal an einer zweiten Wand Wall$_2$. Die Distanz d(k) zwischen dem virtuellen Sender vTX und dem Empfänger RX ist identisch mit der Distanz d(k) zwischen dem realen Sender TX und dem Empfänger RX: d(k) = d$_1$(k) + d$_2$(k) + d$_3$(k) zum Zeitschritt k.

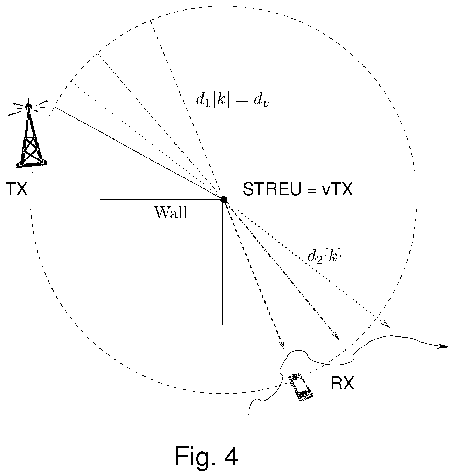

**Fig. 4** erläutert das gleiche Szenario wie **Fig. 1b,** in dem das Signal s(kT) an einer Wandkante STREU gestreut wird. Im Gegensatz zum vorstehend erläuterten Reflexionsfall, ist die Position des virtuellen Senders vTX bei einem sich bewegenden Empfänger RX im vorliegenden Streufall nicht konstant, sondern von der Zeit abhängig: $\tau_i$(k), da der Streuer STREU (vorliegend die Wandkante) ortsfest ist. Allerdings ist leicht ersichtlich, dass die möglichen Positionen des virtuellen Senders vTX auf einem Kreis mit einem Radius d$_v$ liegen, dessen Mittelpunkt die Position des Streuers STREU ist, wobei d$_v$ die Distanz zwischen dem Sender TX und dem Streuer STREU ist. Daher kann man den Mittelpunkt des Kreises als virtuellen Sender vTX$_i$ definieren, und die Distanz d$_v$ als eine zusätzliche Übertragungsdistanz der Signalkomponente s(kT) behandeln. Die Gesamtdistanz d(k) des Signals ist somit: d(k) = d$_i$(k)+ d$_2$(k) = d$_v$ + d$_2$(k) für die Zeit k und die Distanz d$_v$.

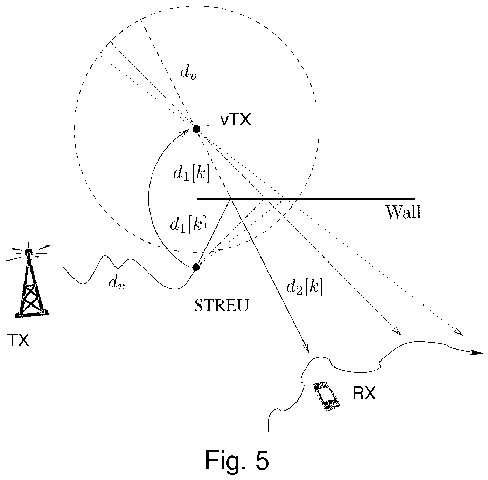

**Fig. 5** zeigt eine Verallgemeinerung der Interaktionen des übermittelten Signals s(kT) bei der Mehrwegeausbreitung. Dabei wird das vom Sender TX ausgesandte Signal s(kT) an dem Streuer STREU gestreut und anschließend an der Wand Wall reflektiert. Zwischen dem Sender TX und dem Streuer STREU sind weitere Interaktionen des Signals s(kT) (Reflexionen/ Streuungen) an Objekten einer Umgebung möglich. Um die Position des virtuellen Senders vTX zu ermitteln, wird der Streuer STREU an der Wand Wall gespiegelt. Dann ist die Position des virtuellen Senders vTX identisch mit dem Mittelpunkt eines Kreises mit dem Radius d$_v$, wobei d$_v$ die Distanz zwischen dem Sender TX und dem Streuer STREU ist. Damit ergibt sich die Gesamtübertragungsdistanz als d(k) = d$_1$(k) + d$_2$(k) + d$_v$ für die Zeit k und die konstante Distanz d$_v$. Die letzten Streuung des Signals s(kT) auf dem Übertragungsweg bzw. dessen Spiegelung definiert auch die Position des virtuellen Senders vTX bzw. des Mittelpunktes des vorgenannten Kreises.

Um die Informationen aller Mehrwegkomponenten s($\tau$) zu nutzen, muss das vorgeschlagene Verfahren auf Basis der vom Empfänger RX empfangenen N(k) Signalkomponenten s$_i$($\tau$) die Positionen von N(k) virtuellen Sendern vTX$_i$ schätzen. Ein Verfahren zur Schätzung der Position des Empfängers RX und gleichzeitig zur Schätzung von Landmarken einer Umgebung ist der sogenannte SLAM-Algorithmus (engl. für "Simultaneous Localization and Mapping-Algorithm"). Vorliegend wird der SLAM-Algorithmus -wie auch das gesamte Verfahren- im Empfänger RX ausgeführt, wobei damit die Position des Empfängers RX sowie die Positionen der virtuellen Sender vTX$_i$ als Landmarken geschätzt werden. Dabei wird ein nichtstationäres Szenario unterstellt, bei dem sich der Empfänger RX in einer ortsfesten (oder zumindest quasistationären) Umgebung bewegt. Durch die Nicht-Stationarität kann ein Tracking-Filter genutzt werden, um rekursive Schätzungen der Position des Empfängers RX sowie der virtuellen Sender vTX$_i$ zu erhalten. Hierzu sind sequentielle Bayes-Filter bekannt. Sequentielle Bayes-Filter schätzen eine unbekannte Wahrscheinlichkeitsdichtefunktion (pdf) rekursiv über die Zeit unter Verwendung von Messdaten und einem mathematischem Prozessmodell, vgl. bspw. Artikel von M. Arulampalam et al., "A tutorial on particle filters for inline nonlinear/ non-gaussian bayesian tracking", Signal Processing, IEEE Transactions, vol. 50, no. 2, Seiten 174-188, Februar 2002.

Mittels eines sequentiellen Bayesfilters kann so ein Zustandvektor X(k) zur Zeit k ermittelt werden, wobei Messdaten z[1 : k] mit {z(i), i=1, ..., k} bis zum Zeitschritt k verwendet werden und die Wahrscheinlichkeitsdichtefunktion pdf: p(X(k)lz[1 : k-1]) ermittelt wird. Der sequentielle Bayesfilter umfasst im Wesentlichen zwei Schritte, einen Vorhersageschritt und einen Up-date-Schritt. Die Wahrscheinlichkeitsdichtefunktion des Vorhersageschrittes ist das Integral der Produkte der Wahrscheinlichkeitsverteilung pdf des Übergangs vom Zeitschritt k-1 zum Zeitschritt k und der letzten Schätzung der pdf zum Zeitschritt k-1, d.h.:

$$(7) \qquad p(X(k) \,|\, z[1:k-1]) = \int p(X(k) \,|\, X(k-1)) p(X(k-1) \,|\, z[1:k-1]) dX(k-1)$$

Für den Up-date-Schritt ergibt sich die Wahrscheinlichkeitsverteilung aus der Bayes Regel, sofern die Messung des Zustands z(k) zur Zeit k bekannt ist:

$$(8) \qquad p(X(k) \,|\, z[1:k]) = \frac{p(z(k) \,|\, X(k)) p(X(k) \,|\, z[1:k-1])}{p(z(k) \,|\, z[1:k-1])}.$$

Das System Model, das die Übergangswahrscheinlichkeitsverteilung p(X(k)lz[1:k-1]) im sequentiellen Bayesfilter definiert, beschreibt die Änderung des Zustandsvektors X(k) zur Zeit k-1 auf den Zeitschritt k:

$$(2) \qquad X(k) = f_k(X(k-1), w(k-1)),$$

wobei $f_k(.,.)$ eine lineare oder nichtlineare Funktion, und der Term $w(k)$ ein Rauschterm ist.

Das Messmodel des sequentiellen Bayesfilters setzt den Zustandvektor $X(k)$ zu den Messungen zum Zeitschritt k wie folgt in Beziehung:

$$(9) \qquad z(k) = h_k(X(k), n(k)),$$

wobei $h_k(.,.)$ eine linear oder nichtlineare Funktion, und $n(k)$ ein Rauschterm ist.

In dem vorgeschlagenen Verfahren schätzt bevorzugt ein SLAM-Alghorithmus die Position des Empfängers RX, die Positionen der virtuellen Sender $vTX_i$, mit i = 1, ...,N(k), und ggf. der Distanz $d_v$. Damit ist der Zustandsvektor $X(k)$ zum Zeitschritt k für N(k) Mehrwegsignalkomponenten $s_i(\tau)$ wie folgt definiert:

$$(1) \qquad X(k) = [r_u(k)^T, v_u(k)^T, x_{v,0}(k)^T, ..., x_{v,N(k)-1}(k)^T]^T$$

mit:

$r_u(k)$:      Positionsvektor des Empfängers

$v_u(k)$ :      Geschwindigkeitsvektor des Empfängers

$x_{v,i}(k):=$      $x_{v,i}(k) = [r_{v,i}(k)^T, d_{v,i}]^T$, Zustandsvektor des virtuellen Senders $vTX_i$ mit $r_{v,i}(k)$ : Positionsvektor des virtuellen Senders $vTX_i$ und $d_{v,i}$: Zusätzlicher Distanz für die Signalkomponente i = 0, ..., N(k)-1.

Der Algorithmus bestimmt die Position der virtuellen Sender $vTX_i$ als den Mittelpunkt eines Kreises mit den Mittelpunktskoordinaten $r_{v,i}(k)$ und dem Radius $d_{v,i}$ im Fall, dass auf dem i-ten Übertragungsweg eine Streuung erfolgt. Erfolgt auf dem i-ten Übertragungsweg keine Streuung, d.h. die Signalkomponente $S_i(\tau)$ wird nur reflektiert, wird der Algorithmus den Radius $d_{v,i} = 0$ schätzen.

Da weiterhin die Reflexionsobjekte in der Umgebung als ortsfest angenommen sind, wird das Zustandsmodel für den Zeitschritt k für jeden virtuellen Sender $vTX_i$, mit i = 0, ..., N(k)-1 bevorzugt wie folgt gewählt:

$$(3) \qquad x_{v,i}(k) = x_{v,i}(k-1) + w_i(k-1)$$

wobei $W_i(k-1)$ein Rauschterm ist. Für das Systemmodel zur Beschreibung der Empfängerposition $r_u(k)$ und der Geschwindigkeit $v_u(k)$ kann ein bekanntes Vorhersagemodell, wie bspw. das von B. W. Parkinson and J. J. Spilker Jr., "Global Positioning System: Theory and Applications", Vol. 1.American Institute of Aeronautics and Astronautics Inc., 1996 oder M. Khider, S. Kaiser, P. Robertson: "A Novel 3-Dimensional Movement Model for Pedestrian Navigation". RIN Journal of Navigation 2012, 65(2): Seiten 245-264. beschriebene Modell genutzt werden.

Zur Einbindung der vom Empfänger RX empfangenen Messergebnisse $q(k,\tau)$ können zwei Strategien genutzt werden. Zum einen können die Messergebnisse $q(k,\tau)$ (gesampelte Empfangssignale) direkt genutzt werden, oder es kann ein zweistufiges Verfahren angewendet werden.

Die erste Strategie sieht vor, dass die gesampelten Empfangssignale $q(k,\tau)$ direkt verwendet werden, wobei gilt:

$$(4) \qquad q(k,\tau) = \sum_{i=0}^{N(k)-1} \alpha_i(k) \cdot s(kT - (\|r_u(k) - r_{v,i}(k)\| + d_{v,i})/c) + n_q(k)$$

mit:

$s(kT)$:      vom Sender übertragenes Signal zum Zeitpunkt kT

$q(k,\tau)$:      vom Empfänger empfangenes Signal

$\alpha_i(k)$:      Amplitude, und

$n_q(k)$:      Rauschterm zum Zeitschritt k.

c:      Lichtgeschwindigkeit

Im Allgemeinen kann $\alpha_i(k)$ auch von der Distanz abhängen.

Die zweite Strategie verwendet einen sogenannten "Super-Resolution"-Algorithmus, wie beispielsweise einen SAGE-basierten Kalmanfilter Algorithmus, wie er in dem Artikel von Thomas Jost et al., "Detection and tracking of mobile propagation channel paths" in Antennas and Propagation, IEEE Transactions on, Vol. 60 No. 10, Seiten 4875-4883, 2012 beschrieben ist. Dieser Algorithmus schätzt die Zeitverzögerung $\tau_i(k)$ der i-ten Signalkomponente $s_i(\tau)$ entsprechend Gleichung (6). Die Ausbreitungsdistanz der i-ten Signalkomponente $s_i(\tau)$ zur Zeit k ist demgemäß: $d_i(k) = c \cdot \tau_i(k)$, wobei c die Lichtgeschwindigkeit ist. Damit kann das Messmodell für die i-te Mehrwegkomponente $s_i(\tau)$ wir folgt definiert werden:

$$(5) \qquad d_i(k) = ||r_u(k) - r_{v,i}(k)|| + d_{v,i} + n_d(k)$$

wobei $n_d(k)$ ein Rauschterm ist, und $d_i(k)$ die geschätzte Gesamtdistanz bis zum Empfänger RX eines Signals $s_i$ ist, das vom i-ten virtuellen Sender $vTX_i$ ausgesandt wurde.

Das beschriebene Verfahren kann in einer Vielzahl von anderen Szenarien angewendet werden. Beispielsweise kann anstelle der Position eines Reflektors oder eines Streuers die Quelle eines "Signals of Opportunity" (SoO) oder eines anderen Netzkotens ermittelt werden. In diesen Fällen werden die Signalquellen jeweils als virtuelle Sender $vTX_i$ behandelt. Nachfolgend sind einige Beispielsanwendungen aufgeführt.

Signalübertragung durch eine Relaisstation

Ein Relais verstärkt empfangene Signale und leitet diese bspw. in einem Netzwerk an weitere Knoten weiter. In einem einfachen Szenario werden von einer Basisstation empfangene Signale von einem Relais verstärkt und an eine mobile Empfangseinheit weitersendet. Die Signalübertragung zwischen der Basisstation und dem Relais erfolge dabei als Direktwelle d.h. in sogenannter "line-of-sight"-Übertragung. In Anwendung des vorgeschlagenen Verfahrens behandelt der mobile Empfänger das Relais als virtuellen Sender vTX und schätzt die Distanz zwischen der Basisstation und dem Relais als $d_v$. Der Empfänger nutzt einen SLAM-Algorithmus zur Schätzung der eigenen Position und der Position des Relais.

Round-Trip-Verzögerungsmessung und kooperative Positionsermittlung

Die Round-Trip-Verzögerung (RTD, für engl. Round trip delay time) ist die Zeit die ein Signal von einem Transceiver TX/RX zu einem spezifischen Partner und zurück zum Transceiver TX/RX benötigt. Round-Trip-Verzögerungsmessungen werden u.a. zur kooperativen Positionsermittlung verwendet, vgl. hierzu bspw.: J E. Staudinger and S. Sand, "Generic real-time round-trip-delay test-bed for cooperative positioning", in Positioning Navigation and Communication (WPNC), 2012 9th Workshop on, März 2012, Seiten 94 -99. Wenn die Position des Partners unbekannt ist, behandelt das vorgeschlagene und im Transceiver ausgeführte Verfahren den Partner als virtuellen Sender vTX. Darüber hinaus können Signale zwischen mehreren Partnern genutzt werden, um Distanzen zwischen den Partner zu schätzen. Der Transceiver nutzt einen SLAM-Algorithmus zur Schätzung der eigenen Position und der Position des Partners.

Signals of Opportunitv (SoO)

Eine mobile Einheit empfange hierbei ein SoO, das von einem Sender mit einer unbekannten Position und einem unbekannten Zeitoffset zu einer Systemzeit der mobilen Einheit ausgesandt wurde, vgl. hierzu: J A. Dammann, S. Sand, and R. Raulefs, "Signals of opportunity in mobile radio positioning," in Signal Processing Conference (EUSIPCO), 2012 Proceedings of the 20th European, August 2012, Seiten 549 -553. In Anwendung des vorgeschlagenen Verfahrens behandelt die mobile Empfänger den Sender als virtuellen Sender vTX und schätzt den Zeitoffset als $d_v$. Der Empfänger nutzt einen SLAM-Algorithmus zur Schätzung der eigenen Position und der Position des Sender des SoO.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterung in der Beschreibung, definiert wird.

**Patentansprüche**

1. Verfahren zur Ermittlung einer Position eines mobilen Empfängers RX, der sich in einer unbekannten aber zumindest quasi-stationären Umgebung bewegt, auf Basis von Signalen $s(\tau)$, die von einem in der Umgebung ortsfest positionierten Sender TX ausgesandt werden, wobei der Empfänger RX ein vom Sender TX ausgestrahltes Signal $s(\tau)$, das über N(k) Übertragungswege als Signalkomponenten $s_i(\tau)$ übertragen wird, als Empfangssignal

$$q(k,\tau) = \sum_{i=0}^{N(k)-1} s_i(\tau)$$

empfängt, mit k:= Zeitschritt, k = 0, 1, 2, ..., $\tau$:= Zeitverzögerung, und i =0, ..., N(k)-1, wobei auf den Übertragungswegen als Interaktionen: Reflexionen der Signalkomponenten $s_i(\tau)$ an Reflektoren und Streuungen der Signalkomponenten $s_i(\tau)$ an Streuern STREU, berücksichtigt werden, und auf Basis der Empfangssignale $q(k,\tau)$ eine Position $r_u(k)$ und eine Geschwindigkeit $v_u(k)$ des Empfängers RX ermittelt werden, wobei:

- auf Basis des Empfangssignals $q(k,\tau)$ für jeden der N(k) Übertragungswege jeweils eine Position $r_{v,i}(k)$ eines virtuellen Senders $vTX_i$ ermittelt wird,
- auf Basis des Empfangssignals $q(k,\tau)$ jeweils eine Übertragungswegdistanz $d_{v,i}$ zwischen dem Sender TX und einem auf dem i-ten Übertragungsweg liegenden letzten Streuer $STREU_i$, sofern ein solcher Streuer $STREU_i$ vorhanden ist,
- eine auf dem i-ten Übertragungsweg übertragene Signalkomponente $s_i(\tau)$ des Signals $s(\tau)$ zwischen dem letzten Streuer $STREU_i$ und dem Empfänger RX keine weitere Streuung mehr erfährt,
- für die virtuellen Sender $vTX_i$ unterstellt wird, dass jede vom Empfänger RX empfangenen Signalkomponente $s_i(\tau)$ vom einem zugeordneten virtuellen Sender $vTX_i$ ausgesandt ist und ohne Interaktion direkt den Empfänger RX erreicht, und
- zumindest die ermittelte Position ru(k) des Empfängers und/oder die Geschwindigkeit vu(k) des Empfängers RX für weitere Auswertungen bereitgestellt und/oder ausgegeben werden.

2. Verfahren nach Anspruch 1,
**dadurch gekennzeichnet, dass** zum Ermitteln der Position $r_u(k)$ und der Geschwindigkeit $v_u(k)$ des Empfängers RX, sowie der Positionen $r_{v,i}(k)$ der virtuellen Sender $vTX_i$ und der Übertragungswegdistanzen $d_{v,i}$ ein Simultaneous Localization and Mapping SLAM-Algorithmus angewendet wird.

3. Verfahren nach Anspruch 1 oder 2,
**dadurch gekennzeichnet, dass** ein Zustandsvektor X(k) definiert ist, mit:

$$(1) \qquad X(k) = [r_u(k)^T, v_u(k)^T, x_{v,0}(k)^T, ..., x_{v,N(k)-1}(k)^T]^T$$

mit:

$r_u(k)$: Position des Empfängers RX zum Zeitschritt k
$v_u(k)$: Geschwindigkeitsvektor des Empfängers RX zum Zeitschritt k, und
$x_{v,i}(k) = [r_{v,i}(k)^T, d_{v,i}]^T$: Zustandsvektor des virtuellen Sender $vTX_i$ zum Zeitschritt k, wobei $r_{v,i}(k)^T$ die Position des Senders $vTX_i$ und $d_{v,i}$ die Übertragungswegdistanz ist,

und eine zeitliche Änderung des Zustandsvektors X(k) gemäß:

$$(2) \qquad X(k) = f_k(X(k-1), w(k-1))$$

abgebildet ist, mit:

$f_k$: lineare oder nichtlineare Funktion von X(k-1), und
w(k- 1): Rauschterm.

4. Verfahren nach Anspruch 1 oder 2,
**dadurch gekennzeichnet, dass** ein Zustandsvektor X(k) definiert ist, mit:

$$(1) \qquad X(k) = [r_u(k)^T, v_u(k)^T, x_{v,0}(k)^T, ..., x_{v,N(k)-1}(k)^T]^T$$

mit:

$r_u$(k): Position des Empfängers RX zum Zeitschritt k

$v_u$(k): Geschwindigkeitsvektor des Empfängers RX zum Zeitschritt k, und

$x_{v,i}$(k) = [$r_{v,i}$(k)$^T$, $d_{v,i}$]$^T$: Zustandsvektor des virtuellen Sender vTX$_i$ zum Zeitschritt k, wobei $r_{v,i}$(k)$^T$ die Position des Senders vTX$_i$ und $d_{v,i}$ die Übertragungswegdistanz ist,

und eine zeitliche Änderung des Zustandsvektors $x_{v,i}$(k) gemäß:

$$(3) \qquad x_{v,i}(k) = x_{v,i}(k-1) + w_i(k-1)$$

abgebildet ist, und daher die Position des jeweiligen virtuellen Senders annähernd gleich bleibt, mit:

$w_i$(k-1): Rauschterm.

5. Verfahren nach einem der Ansprüche 1 bis 4,
**dadurch gekennzeichnet, dass** der Zustandsvektor X(k) mittels eines rekursiv definierten sequentiellen Bayes-Filters ermittelt wird.

6. Verfahren nach einem der Ansprüche 1 bis 5,
**dadurch gekennzeichnet, dass** für die Empfangssignale q(k,$\tau$) gilt:

$$(3) \qquad q(k,\tau) = \sum_{i=0}^{N(k)-1} \alpha_i(k) \cdot s(kT - (\|x_u(k) - r_{v,i}(k)\| + d_{v,i})/c) + n_q(k)$$

mit:

s(kT): vom Sender TX zum Zeitpunkt kT übertragenes Signal

q(k,$\tau$): vom Empfänger RX empfangenes Signal

$\alpha_i$(k): Amplitude

$n_q$(k): Rauschterm zum Zeitschritt k

7. Verfahren nach einem der Ansprüche 1 bis 5,
**dadurch gekennzeichnet, dass** ein Super Resolution-Algorithmus genutzt wird, um eine Zeitverzögerung $\tau_i$(k) der i-ten Signalkomponente $s_i(\tau)$ beim Empfänger RX zu schätzen.

8. Verfahren nach einem der Ansprüche 1 bis 7,
**dadurch gekennzeichnet, dass** für die i-te Signalkomponente $s_i(\tau)$ folgendes Distanzmodell verwendet wird:

$$(4) \qquad d_i(k) = \|x_u(k) - r_{v,i}(k)\| + d_{v,i} + n_d(k) = c\tau_i(k)$$

mit:

$d_i$(k): geschätzte Ausbreitungsdistanz der Signalkomponente $s_i(\tau)$ von dem virtuellen Sender vTx$_i$,

c: Lichtgeschwindigkeit, und

$n_d$(k): Rauschterm.

9. Verfahren nach einem der Ansprüche 1 bis 8,
**dadurch gekennzeichnet, dass** zu Beginn des Verfahrens für die Position $r_u$(k) und die Geschwindigkeit $v_u$(k) des Empfängers RX eine Startposition $r_u$(k=0) und Startgeschwindigkeit $v_u$(k=0) oder eine Wahrscheinlichkeitsverteilung für eine Startposition $r_u$(k=0) und Startgeschwindigkeit $v_u$(k=0) vorgegeben wird.

10. Mobiler Empfänger RX, der in einer unbekannten aber zumindest quasi-stationären Umgebung bewegbar und dazu eingerichtet und ausgeführt ist eine Position des Empfängers RX auf Basis von Signalen s(kT) zu ermitteln, die von einem in der Umgebung ortsfest positionierten Sender TX ausgesandt werden, wobei der Empfänger RX ein vom Sender TX ausgestrahltes Signal s(kT), das über N(k) Übertragungswege als Signalkomponenten $s_i(\tau)$ übertragen

$$q(k,\tau) = \sum_{i=0}^{N(k)-1} s_i(\tau)$$

wird als Empfangssignal empfängt, mit k:= Zeitschritt, k = 0, 1, 2, ..., $\tau$:= Zeitverzögerung, und i = 0, ..., N(k)-1, wobei auf den Übertragungswegen als Interaktionen Reflexionen der Signalkomponenten $s_i(\tau)$ an Reflektoren und Streuungen der Signalkomponenten $s_i(\tau)$ an Streuern berücksichtigt werden, und mit dem ein Verfahren gemäß einem der vorstehenden Ansprüche ausführbar ist,

bei dem ein Auswertemittel vorhanden ist, das derart ausgeführt und eingerichtet ist, dass auf Basis der Empfangssignale $q(k,\tau)$ eine Position $r_u(k)$ und eine Geschwindigkeit $v_u(k)$ des Empfängers RX ermittelt werden, wobei

- auf Basis des Empfangssignals $q(k,\tau)$ für jeden der N(k) Übertragungswege jeweils eine Position $r_{v,i}(k)$ eines virtuellen Senders $vTX_i$ ermittelt wird,
- auf Basis des Empfangssignals $q(k,\tau)$ jeweils eine Übertragungswegdistanz $d_{v,i}$ zwischen dem Sender TX und einem auf dem i-ten Übertragungsweg liegenden letzten Streuer $STREU_i$ ermittelt wird, sofern ein solcher Streuer $STREU_i$ vorhanden ist,
- eine auf dem i-ten Übertragungsweg übertragene Signalkomponente $s_i(\tau)$ des Signals s(kT) zwischen dem letzten Streuer $STREU_i$ und dem Empfänger RX keine weitere Streuung mehr erfährt,
- für die virtuellen Sender $vTX_i$ unterstellt wird, dass jede vom Empfänger RX empfangenen Signalkomponente $s_i(\tau)$ vom einem zugeordneten virtuellen Sender $vTX_i$ ausgesandt ist und ohne Interaktion direkt den Empfänger RX erreicht, und
- ein Ausgabemittel vorhanden ist, mit dem zumindest die ermittelte Position $r_u(k)$ des Empfängers und/oder die Geschwindigkeit $v_u(k)$ des Empfängers RX für weitere Auswertungen bereitstellbar und/oder ausgegebbar sind.

## Claims

1. A method for ascertaining a position of a mobile receiver RX moving in an unknown but quasi-stationary environment on the basis of signals $s(\tau)$, which are emitted by a transmitter TX fixedly positioned in the environment, wherein the receiver RX receives a signal $s(\tau)$, which is transmitted via N(k) transmission paths as signal components $s_i(\tau)$

$$q(k,\tau) = \sum_{i=0}^{N(k)-1} s_i(\tau)$$

from the transmitter TX, as a receive signal with k:= time step, k = 0, 1, 2, ..., $\tau$:= time delay, and i = 0 , ..., N(k)-1, wherein reflections of the signal components $s_i(\tau)$ on the reflectors and scatterings of the signal components $s_i(\tau)$ on scatterers $STREU_i$ are taken into account as interactions on the transmission paths, and based on the receive signals $q(k,\tau)$ a position $r_u(k)$ and a speed $v_u(k)$ of the receiver RX are ascertained, wherein:

- based on the receive signal $q(k,\tau)$ a respective position $r_{v,i}(k)$ of a virtual transmitter $vTX_i$ is ascertained for each of the N(k) transmission paths,
- based on the receive signal $q(k,\tau)$ a respective transmission path distance $d_{v,i}$ is ascertained between the transmitter TX and a last scatterer $STREU_i$ in the i-th transmission path, insofar as such a scatterer $STREU_i$ is present,
- a signal component $s_i(\tau)$ of the signal $s(\tau)$ transmitted on the i-th transmission path is no longer subjected to a further scattering between the last scatterer $STREU_i$ and the receiver RX,
- it is assumed for the virtual transmitters $vTX_i$, that each signal component $s_i(\tau)$ received by the receiver RX is emitted by an associated virtual transmitter $vTX_i$ and arrives directly without interaction at the receiver RX, and
- at least the ascertained position ru(k) of the receiver and/or the speed vu(k) of the receiver RX are made available and/or output for further evaluations.

2. The method according to claim 1,
**characterised in that** a SLAM algorithm (SLAM = abbreviation for "simultaneous localization and mapping") is used for ascertaining the position $r_u(k)$ and the speed $v_u(k)$ of the receiver RX, as well as the positions $r_{v,i}(k)$ of the virtual

transmitters $vTX_i$ and the transmission path distances $d_{v,i}$.

3. The method according to claim 1 or 2,
**characterised in that** a state vector $X(k)$ is defined, with:

$$(1) \qquad X(k) = [r_u(k)^T, v_u(k)^T, x_{v,0}(k)^T, ..., x_{v,N(k)-1}(k)^T]^T$$

with:

$r_u(k)$ : position of receiver RX at time step k $v_u(k)$ : speed vector of receiver RX at time step k, and
$x_{v,i}(k) = [r_{v,i}(k)^T, d_{v,i}]^T$: state vector of virtual transmitter $vTX_i$ at time step k, wherein $r_{v,i}(k)^T$ is the position of transmitter $vTX_i$ and $d_{v,i}$ is the transmission path distance,
and a temporal change of the state vector $X(k)$ is mapped according to:

$$(2) \quad X(k) = f_k(X(k-1), w(k-1))$$

with:

$f_k$: linear or non-linear function of X(k-1), and
w(k-1): noise term.

4. The method according to claim 1 or 2, **characterised in that** a state vector $X(k)$ is defined, with:

$$(1) \qquad X(k) = [r_u(k)^T, v_u(k)^T, x_{v,0}(k)^T, ..., x_{v,N(k)-1}(k)^T]^T$$

with:

$r_u(k)$ : position of receiver RX at time step k $v_u(k)$ : speed vector of receiver RX at time step k, and
$x_{v,i}(k) = [r_{v,i}(k)^T, d_{v,i}]^T$: state vector of virtual transmitter $vTX_i$ at time step k, wherein $r_{v,i}(k)^T$ is the position of transmitter $vTX_i$ and $d_{v,i}$ is the transmission path distance,
and a temporal change of the state vector $x_{v,i}(k)$ is mapped according to:

$$(3) \quad x_{v,i}(k) = x_{v,i}(k-1) + w_i(k-1)$$

(and the position of the respective virtual transmitter therefore remains approximately the same), with:

$w_i(k-1)$: noise term.

5. The method according to one of claims 1 to 4, **characterised in that** the state vector $X(k)$ is ascertained by means of a recursively defined sequential Bayes filter.

6. The method according to one of claims 1 to 5, **characterised in that** the following applies to the receive signals $q(k,\tau)$:

$$(3) \qquad q(k,\tau) = \sum_{i=0}^{N(k)-1} \alpha_i(k) \cdot s(kT - (\|x_u(k) - r_{v,i}(k)\| + d_{v,i})/c) + n_q(k)$$

with:

s(kT): signal transmitted by the transmitter TX at the time kT
$q(k,\tau)$: signal received by the receiver RX $\alpha_i(k)$: amplitude
$n_q(k)$: noise term at time step k

7. The method according to one of claims 1 to 5, **characterised in that** a super resolution algorithm is utilised for estimating a time delay $\tau_i(k)$ of the i-th signal component $s_i(\tau)$ at the receiver RX.

8. The method according to one of claims 1 to 7, **characterised in that** the following distance model is used for the i-th signal component $s_i(\tau)$:

$$(4) \qquad d_i(k) = \left\| x_u(k) - r_{v,i}(k) \right\| + d_{v,i} + n_d(k) = c\tau_i(k)$$

with:

$d_i(k)$: estimated propagation distance of the signal component $s_i(\tau)$ from the virtual transmitter $vTx_i$,
c: speed of light, and
$n_d(k)$: noise term.

9. The method according to one of claims 1 to 8, **characterised in that** at the start of the process a starting position $r_u(k=0)$ and a starting speed $v_u(k=0)$ or a probability distribution for a starting position $r_u(k)$ and starting speed $v_u(k)$ is defined for the position $r_u(k)$ and the speed $v_u(k)$ of the receiver RX.

10. A mobile receiver RX movable in an unknown but at least quasi-stationary environment and adapted and implemented to ascertain a position of the receiver RX on the basis of signals s(kT), which are emitted by a transmitter TX fixedly positioned in the environment, wherein the receiver RX receives a signal $s(\tau)$, which is transmitted via N(k) trans-

$$q(k,\tau) = \sum_{i=0}^{N(k)-1} s_i(\tau)$$

mission paths as signal components $s_i(\tau)$ from the transmitter TX, as a receive signal
with k:= time step, k = 0, 1, 2, ..., $\tau$:= time delay, and i = 0 , ..., N(k)-1, wherein reflections of the signal components $s_i(\tau)$ on the reflectors and scatterings of the signal components $s_i(\tau)$ on scatterers $STREU_i$ are taken into account as interactions on the transmission paths, and with which a method according to one of the preceding claims can be executed, which encompasses an evaluation means, which is implemented and arranged such that based on the receive signals $q(k,\tau)$ a position $r_u(k)$ and a speed $v_u(k)$ of the receiver RX are ascertained, wherein

- based on the receive signal $q(k,\tau)$ a respective position $r_{v,i}(k)$ of a virtual transmitter $vTX_i$ is ascertained for each of the N(k) transmission paths,
- based on the receive signal $q(k,\tau)$ a respective transmission path distance $d_{v,i}$ is ascertained between the transmitter TX and a last scatterer $STREU_i$ in the i-th transmission path, insofar as such a scatterer $STREU_i$ is present,
- eine signal component $s_i(\tau)$ of the signal s(kT) transmitted on the i-th transmission path is no longer subjected to a further scattering between the last scatterer $STREU_i$ and the receiver RX,
- it is assumed for the virtual transmitters $vTX_i$, that each signal component $s_i(\tau)$ received by the receiver RX is emitted by an associated virtual transmitter $vTX_i$ and arrives directly without interaction at the receiver RX, and
- an output means is present, with which at least the ascertained position ru(k) of the receiver and/or the speed vu(k) of the receiver RX can be made available and/or output for further evaluations.

**Revendications**

1. Procédé pour la détermination d'une position d'un récepteur mobile RX, lequel se déplace dans un environnement inconnu mais au moins quasi stationnaire, sur la base de signaux $s(\tau)$ qui sont émis par un émetteur TX positionné de manière stationnaire dans l'environnement, dans lequel le récepteur RX réceptionne un signal $s(\tau)$, émis par l'émetteur TX, lequel est transmis via N(k) voies de transmissions en tant que composantes de signal $s(\tau)$, en tant

que signal de réception $q(k,\tau) = \sum_{i=0}^{N(k)-1} s_i(\tau)$ avec k : = incrément de temps, k = 0,1,2,..., $\tau$ : = retard temporel, et i = 0,..., N(k)-1, dans lequel, sur les voies de transmission, on tient compte, en tant qu'interactions : de réflexions des composantes de signal $s_i(\tau)$ au niveau de réflecteurs et de diffusions des composantes de signal $s_i(\tau)$ au niveau de diffuseurs STREU et détermine, sur la base des signaux de réception $q(k\tau)$, une position $r_u(k)$ et une vitesse $v_u(k)$ du récepteur RX, dans lequel :

- sur la base du signal de réception q(kτ) on détermine, pour chacune des N(k) voies de transmission, respectivement une position $r_{v,i}(k)$ d'un émetteur virtuel vTX$_i$,
- sur la base du signal de réception q(kτ), on détermine respectivement une distance de voie de transmission $d_{v,i}$ entre l'émetteur TX et un dernier diffuseur STREU$_i$ situé sur la i-ème voie de transmission dans la mesure où il existe un tel diffuseur STREU$_i$,
- une composante de signal $s_i(τ)$, transmise sur la i-ème voie de transmission, du signal s(τ) n'est pas soumise à une autre diffusion entre le dernier diffuseur STREU$_i$ et le récepteur RX,
- on postule, pour l'émetteur virtuel vTX$i$, que chaque composante de signal $s_i(τ)$ réceptionnée par le récepteur RX est émise par un émetteur virtuel vTX$_i$ associé et atteint directement le récepteur RX sans interaction, et
- on met à disposition et/ou fait sortir au moins la position ru(k) déterminée du récepteur et/ou la vitesse vu(k) du récepteur RX pour d'autres analyses.

**2.** Procédé selon la revendication 1,
**caractérisé en ce que**, pour la détermination de la position $r_u(k)$ et de la vitesse $v_u(K)$ du récepteur RX ainsi que des positions $r_{v,j}(k)$ de l'émetteur virtuel vTX$_i$ et des distances de voie de transmission $d_{v,j}$, on utilise un algorithme de Simultaneous Localization and Mapping SLAM.

**3.** Procédé selon la revendication 1 ou 2,
**caractérisé en ce qu'**un vecteur d'état X(k) est défini, avec :

$$(1) \qquad X(k) = [r_u(k)^T, v_u(k)^T, x_{v,0}(k)^T, ..., x_{v,N(k)-1}(k)^T]^T$$

avec :

$r_u(k)$ : position du récepteur RX au niveau de l'incrément de temps k
$v_u(k)$ : vecteur de vitesse du récepteur RX au niveau de l'incrément k, et
$x_{v,i}(k) = [r_{v,i}(k)^T, d_{v,i}]^T$ : vecteur d'état de l'émetteur virtuel vTX$_j$ au niveau de l'incrément de temps k, où $r_{v,j}(k)^T$ est la position de l'émetteur vTX$_i$ et $d_{v,j}$ la distance de voie de transmission,
et qu'une variation dans le temps du vecteur d'état X(k) selon :

$$(2) \quad X(k) = f_k(X(k-1), w(k-1))$$

est représentée, avec :

$f_k$: fonction linéaire ou non linéaire de X(k-1), et
w(k-1) : terme de bruit.

**4.** Procédé selon la revendication 1 ou 2,
**caractérisé en ce qu'**un vecteur d'état X(k) est défini, avec :

$$(1) \qquad X(k) = [r_u(k)^T, v_u(k)^T, x_{v,0}(k)^T, ..., x_{v,N(k)-1}(k)^T]^T$$

avec :

$r_u(k)$ : position du récepteur RX au niveau de l'incrément de temps k
$v_u(k)$ : vecteur de vitesse du récepteur RX au niveau de l'incrément k, et
$x_{v,i}(k) = [r_{v,i}(k)^T, d_{v,i}]^T$: vecteur d'état de l'émetteur virtuel vTX$_j$ au niveau de l'incrément de temps k, où $r_{v,j}(k)^T$ est la position de l'émetteur vTX$_i$ et $d_{v,j}$ la distance de voie de transmission,
et qu'une variation dans le temps du vecteur d'état $x_{v,j}(k)$ selon :

$$(3) \quad x_{v,i}(k) = x_{v,i}(k-1) + w_i(k-1)$$

est représentée et de ce fait, la position de l'émetteur virtuel respectif reste approximativement identique, avec :

$w_j(k-1)$ : terme de bruit.

**5.** Procédé selon l'une des revendications 1 à 4,
**caractérisé en ce que** le vecteur d'état X(k) est déterminé au moyen d'un filtre de Bayes séquentiel défini de manière récursive.

**6.** Procédé selon l'une des revendications 1 à 5 ;
**caractérisé en ce que**, pour les signaux de réception q(k,τ) :

$$( 3 ) \quad q(k,\tau) = \sum_{i=0}^{N(k)-1} \alpha_i(k) \cdot s(kT - (\left\| x_u(k) - r_{v,i}(k) \right\| + d_{v,i})/c) + n_q(k)$$

s'applique, avec :

s(kT) : signal transmis par l'émetteur TX à l'instant kT
q(k,τ) : signal réceptionné par le récepteur RX
$\alpha_i$(k) : amplitude
$n_q$(k) : terme de bruit au niveau de l'incrément de temps k.

**7.** Procédé selon l'une des revendications 1 à 5, **caractérisé en ce qu'**un algorithme de super-résolution est utilisé pour évaluer un retard temporel $\tau_i$(k) de la i-ème composante de signal $s_i(\tau)$ au niveau du récepteur RX.

**8.** Procédé selon l'une des revendications 1 à 7, **caractérisé en ce que**, pour la i-ème composante de signal $s_i(\tau)$, on utilise le modèle de distance suivant :

$$( 4 ) \quad d_i(k) = \left\| x_u(k) - r_{v,i}(k) \right\| + d_{v,i} + n_d(k) = c\tau_i(k)$$

avec :

$d_i$(k) : distance de propagation estimée de la composante de signal $s_i(\tau)$ de l'émetteur virtuel $vtx_j$,
c : vitesse de la lumière, et
$n_d$(k) : terme de bruit.

**9.** Procédé selon l'une des revendications 1 à 8, **caractérisé en ce qu'**au début du procédé, pour la position $r_u$(k) et la vitesse $v_u$(k) du récepteur RX, on prescrit une position de départ $r_u$(k=0) et une vitesse de départ $v_u$(k=0), ou une distribution de probabilité pour une position de départ $r_u$(k=0) et une vitesse de départ $v_u$(k=0).

**10.** Récepteur RX mobile, lequel est mobile dans un environnement inconnu mais au moins quasi stationnaire et est étudié et réalisé pour déterminer une position du récepteur RX sur la base de signaux s(kT), lesquels sont émis par un émetteur TX positionné de manière stationnaire dans l'environnement, dans lequel le récepteur RX réceptionne un signal s(kT), émis par l'émetteur TX, lequel est transmis via N(k) voies de transmission en tant que composantes

de signal $s_i(\tau)$, en tant que signal de réception $q(k,\tau) = \sum_{i=0}^{N(k)-1} s_i(\tau)$, avec k : = incrément de temps, k = 0,1,2,..., τ : = retard temporel, et i = 0,..., N(k)-1, dans lequel, sur les voies de transmission, on tient compte, en tant qu'interactions, de réflexions des composantes de signal $s_i(\tau)$ au niveau de réflecteurs et de diffusions des composantes de signal $s_i(\tau)$ au niveau de diffuseurs, et avec lequel il est possible de mettre en œuvre un procédé selon l'une des revendications précédentes, où un moyen d'évaluation existe, lequel est réalisé et étudié de telle sorte que, sur la base des signaux de réception q(k,i), une position $r_u$(k) et une vitesse $v_u$(k) du récepteur RX sont déterminées, dans lequel :

- sur la base du signal de réception q(kτ) on détermine, pour chacune des N(k) voies de transmission, respectivement une position $r_{v,i}$(k) d'un émetteur virtuel $vTX_i$,
- sur la base du signal de réception q(kτ), on détermine respectivement une distance de voie de transmission $d_{v,i}$ entre l'émetteur TX et un dernier diffuseur $STREU_i$ situé sur la i-ème voie de transmission dans la mesure où il existe un tel diffuseur STREU$_i$,
- une composante de signal s$_i$($\tau$), transmise sur la i-ème voie de transmission, du signal s(kT) n'est pas soumise à une autre diffusion entre le dernier diffuseur STREU$_i$ et le récepteur RX,
- on postule, pour l'émetteur virtuel vTX$_i$, que chaque composante de signal s$_i$($\tau$) réceptionnée par le récepteur RX est émise par un émetteur virtuel vTX$_i$ associé et atteint directement le récepteur RX sans interaction, et
- un moyen de sortie existe, avec lequel il est possible de mettre à disposition et/ou faire sortir au moins la position r$_u$(k) déterminée du récepteur et/ou la vitesse v$_u$(k) du récepteur RX pour d'autres analyses.

Fig. 1a

Fig. 1b

Fig. 2

vTX

$d_1[k] + d_2[k]$

$d_2[k]$

Wall$_2$

$d_1[k]$

$d_3[k]$

$d_1[k]$

Wall$_1$

RX

TX

Fig. 3

$$d_1[k] = d_v$$

STREU = vTX

$$d_2[k]$$

TX

Wall

RX

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2008106468 A1
- EP 2570772 A1


**In der Beschreibung aufgeführte Nicht-Patentliteratur**

- **F. ANTREICH ; J, NOSSEK ; W. UTSCHICK.** Maximim Likelihood Delay Estimation in a Navigation Receiver for Aeronautical Applications. *Aerospace Science and Technology,* 2008, vol. 12 (3), 256-267
- **B. KRACH ; P ROBERTSON ; R WEIGEL.** An Efficient Two-Fold Marginalized Bayesian Filter for Multipath Mitigation in GNSS Receivers. *EURASIP J Adv. Sig. Proc.,* 2010, vol. 2010
- **P. CLOSAS ; C. FERNÄNDEZ-PRADES ; J.A. FERNÄNDEZ-RUBIO.** *A Bayesian Approach to Multipath Mitigation in GNSS Receivers,* August 2009, vol. 3 (4), 695-706
- **P. MEISSNER ; K. WITRISAL.** Multipath-Assisted Single-Anchor Indoor Localization in an Office Environment. *IWSSIP,* April 2012
- **VON THOMAS JOST et al.** Detection and tracking of mobile propagation channel paths. *Antennas and Propagation, IEEE Transactions on,* Oktober 2012, vol. 60 (10), 4875-4883
- **VON M. ARULAMPALAM et al.** A tutorial on particle filters for inline nonlinear/ non-gaussian bayesian tracking. *Signal Processing, IEEE Transactions,* Februar 2002, vol. 50 (2), 174-188
- **VON B. W. PARKINSON ; J. J. SPILKER JR.** Global Positioning System: Theory and Applications. American Institute of Aeronautics and Astronautics Inc, 1996, vol. 1
- **M. KHIDER ; S. KAISER ; P. ROBERTSON.** A Novel 3-Dimensional Movement Model for Pedestrian Navigation. *RIN Journal of Navigation,* 2012, vol. 65 (2), 245-264
- **VON THOMAS JOST et al.** Detection and tracking of mobile propagation channel paths. *Antennas and Propagation, IEEE Transactions on,* 2012, vol. 60 (10), 4875-4883
- **J E. STAUDINGER ; S. SAND.** Generic real-time round-trip-delay test-bed for cooperative positioning. *Positioning Navigation and Communication (WPNC),* Marz 2012, 94-99
- **J A. DAMMANN ; S. SAND ; R. RAULEFS.** Signals of opportunity in mobile radio positioning. *Signal Processing Conference (EUSIPCO), 2012 Proceedings of the 20th European,* August 2012, 549-553